# EUROPÄISCHE PATENTANMELDUNG

(11) **EP 1 402 930 A1**
(43) Veröffentlichungstag der Anmeldung: **31.03.2004**
(21) Anmeldenummer: 03450189.0
(22) Anmeldetag: 26.08.2003
(51) Int. Cl.: A63F 13/12, G06K 19/077

(54) **System und Verfahren zur Durchführung von Spielen über elektronische Kommunikationsmittel**

(30) Priorität: 25.09.2002 AT 63502 U
(71) Anmelder: Dötzl, Heinz, 2263 Waidendorf Dürnkrut (AT); Reichl, Harald, 1160 Wien (AT)
(72) Erfinder: Dötzl, Heinz, 2263 Waidendorf (AT); Reichl, Harald, 1160 Wien (AT)
(74) Vertreter: Rippel, Andreas, Dipl.-Ing.

(57) **Zusammenfassung**

Bei einem System zur Durchführung von Spielen über elektronische Kommunikationsmittel ist zur Übermittlung von das Spiel betreffenden Informationen vom und zum Spielebetreiber (8) jedem Spieler (7) eine mit einem integrierten Schaltkreis versehene Eingabe/Anzeigevorrichtung (1) zugeordnet, die vorzugsweise eine mit einem integrierten Schaltkreis versehene Spielekarte (1) ist und eine Schnittstelle für eine Kommunikationseinrichtung (10) des Spielers (7) aufweist.

Dieses System ist für die Teilnahme an jeder Art von Spielen, vorzugsweise Glücksspielen, insbesondere im Rahmen von Femseh- und Gewinnspielshows, unabhängig von deren Ort und Zeitpunkt geeignet.

## Beschreibung

Die Erfindung bezieht sich auf ein System und ein Verfahren zur Durchführung von Spielen über elektronische Kommunikationsmittel. Insbesondere soll das System und das Verfahren für die Teilnahme an jeder Art von Spielen, vorzugsweise Glücksspielen, insbesondere im Rahmen von Fernseh- und Gewinnspielshows, unabhängig von deren Ort und Zeitpunkt geeignet sein.

Spiel ist eine Tätigkeit, die ohne bewußtem Zweck zum Vergnügen, zur Entspannung, aus Freude an ihr selbst und an ihrem Resultat ausgeübt wird. Es hat Wettkampfcharakter, wenn es nach bestimmten Regeln von einer Gruppe von Personen durchgeführt wird. Unter dem Begriff Glücksspiel versteht man alle Spiele, deren Endergebnisse durch den Zufall bestimmt werden, beispielsweise Gewinnspiele, Tippspiele, Lottospiele und Wetten.

TV-Spieleshows sind eine spezielle Form von Spielen, da dieses Medium einer breiten Masse der Bevölkerung die Möglichkeit zur beobachtenden oder auch aktiven Teilnahme an einem Gewinnspiel ermöglicht. Bei TV-Spieleshows unterscheidet man:
Gameshow: Teilnehmer muß vor allem durch seine Geschicklichkeit Aufgaben lösen, das Merkmal "Zufall" spielt eine untergeordnete Rolle (beispielsweise "Moneymaker" im Österreichischen Rundfunk-Fernsehen "ORF");
Wissens-Show: die Teilnehmer müssen vor allem durch ihr Wissen Aufgaben/Fragen lösen, das Merkmal "Zufall" spielt nur eine unbedeutende Rolle (beispielsweise die "Millionenshow" des ORF);
Glücksspiel-Show: Der Gewinn des Teilnehmers ist ausschließlich zufallsabhängig (beispielsweise "Millionenrad" im ORF)

Mischformen beinhalten beispielsweise die Möglichkeit des Kandidaten, durch sein Wissen Aufgaben zu lösen, während der Gewinn durch Zufall festgelegt wird. So lösen die Kandidaten beispielsweise beim sogenannten "Glücksrad" in SAT1 ein Kreuzworträtsel; je richtig genanntem Buchstaben wird durch Zufall der Gewinn durch das Drehen des Glücksrades festgelegt.

Es ist bekannt, dass die Vergabe der Berechtigungen für die Teilnahme vor der TV-Spieleshow durchgeführt werden muss. Oft wird dabei ein mehrstufiges System verwendet, wonach in einem ersten Verfahren (zufällig) ein Kandidatenpool ausgewählt wird (beipielsweise durch Ziehung aus einer Menge eingesandter Teilnahmekarten), der gleichzeitig das Publikum der Show bildet. Aus den Anwesenden wird dann in einem zweiten Verfahren (zufällig oder durch den Moderator) der jeweils Spielberechtigte ermittelt.

Eines der am weitesten verbreiteten Systeme zur Verteilung von Teilnahmeberechtigungen an Gewinnspielen ist beispielsweise die Beilage einer Teilnahmekarte in Printmedien oder Postwurfsendungen, mit der Aufforderung der Einsendung an die spielveranstaltende Stelle. Damit verbunden sind, um eine entsprechende Wirksamkeit zu erreichen, aufwendige Informations- und Marketingmassnahmen, die vor der Konzeption einer Fernseh- Gewinnspielshow durchgeführt werden müssen.

Dieses bedingt eine lange Vorbereitungszeit und verhindert dadurch eine kurzfristige Realisierung der Fernseh- Gewinnspielshow sowie die Teilnahme an einer solchen. Auch die Information, welche Teilnahmekarten ausgegeben wurden, kann nicht ohne unverhältnismäßig hohem Zusatzaufwand beantwortet werden.

Das Ziel der vorliegenden Erfindung besteht daher darin, ein System und ein Verfahren zu schaffen, das eine einfache spontane Teilnahme an Spielen, insbesondere an TV-Spieleshows, unabhängig von Ort und Zeitpunkt erlaubt. Weiters soll erreicht werden, dass das Spielergebnis, sowie in weiterer Folge auch die Überprüfung und Erteilung eines möglichen Gewinnanspruches mit dem selben Verfahren durchgeführt werden kann.

Dieses Ziel wird dadurch erreicht, dass zur Übermittlung von das Spiel betreffenden Informationen vom und zum Spielebetreiber jedem Spieler eine mit einem integrierten Schaltkreis versehene Eingabe/Anzeigevorrichtung zugeordnet ist, die vorzugsweise eine mit einem integrierten Schaltkreis versehene Spielekarte ist und eine Schnittstelle für eine Kommunikationseinrichtung des Spielers aufweist.

Die Kommunikation oder Informationsübertragung kann mittels verschiedener, herkömmlicher Techniken erfolgen. Bekannt sind analoge und digitale Einrichtungen zur Kommunikationsübertragung beispielsweise Telefonkabel, Lichtwellenleiter, Mobilfunk, Satelliten, und dgl., die eine jederzeitige Teilnahme an einem Spiel, unabhängig vom Ort und Zeitpunkt ermöglichen.

Derartige Einrichtungen sind notwendig, wenn die Spieler rasche Informationen über spielerelevante Sachverhalte erhalten sollen und eine interaktive Teilnahme am Spielgeschehen vorgesehen ist.

Wird die Vorrichtung für den Spieler zum Empfang von Informationen und/oder Befehlen einerseits und zur Eingabe bzw. Weiterleitung von Befehlen und/oder Informationen andererseits in Form einer Spielekarte ausgeführt, deren Aufbau leicht modifizierbar ist, so ist die vielfältige Ausgestaltung des Spieles, sowohl bei der Entwicklung als auch bei nachfolgenden Ergänzungen und/oder Änderungen ohne wesentlichen Aufwand besonders leicht möglich und rasch umsetzbar.

Ist die Spielekarte mit einer Folientastatur ausgeführt, so kann eine leicht austauschbare Deckfolie [Oberfläche] eine Spielekombination, beispielsweise eine Aneinanderreihung verschiedener geometrischer Formen wie Quadrate, Kreise, Dreiecke, Punkte, u.dgl. darstellen, wobei durch verschiedenfarbige Leuchtmittel wie mehrfärbige, punktförmige LED-Anzeigen eine grössere Anzahl an Spielekombinationen bereitgestellt werden.

Um die Teilnahme an Spielen unabhängig vom Ort und Zeitpunkt zu ermöglichen, ist auch die Spielekarte mit einer Schnittstelle ausgerüstet, die mit einer Kommunikationseinrichtung beispielsweise einem PC, Mobiltelefon, Satellitenreceiver, interaktive Fernsehgeräte, u.dgl. verbunden ist.

ist die Teilnahme, die Information über das ablaufende Spielgeschehen und die Überprüfung des Gewinnanspruches rasch verfügbar, so können auch sehr kurze Spielsequenzen, sogenannte Spielepins durchgeführt werden. Diese sind beispielsweise besonders vorteilhaft zwischen kurzen TV- Werbefilmen [Werbespots], um eine Aufwertung der Werbezeiten zu erzielen.

Der Start des Verfahrens setzt eine Reihe von Rahmenbedingungen voraus; dies sind bekannterweise die Bereitstellung von betriebsbereiten Kommunikationseinrichtungen.

Ausgelöst wird das Verfahren durch den Wunsch des Spielers am Spiel teilzunehmen. Eine Registrierung des Persönlichkeitsprofiles wie Name, Adresse, Geburtsdatum, u.dgl., das beim Spielebetreiber hinterlegt wird, kann grundsätzlich Teil des Verfahrens sein, ist jedoch nicht Voraussetzung zur Teilnahme am Spiel selbst.

Vorteilhaft ist es, wenn eine Vielzahl von Merkmalen des Spielers in Form eines Persönlichkcitsprofiles beim Spielebetreiber hinterlegt werden, damit eine möglichst sichere, einzigartige Identifikation der Spielekombinationen zum Spieler und damit zu seiner eindeutigen Identifikation zur Verfügung steht.

Werden zur Generierung der Merkmale ein Zufallsgenerator oder mathematische Algorithmen eingesetzt, so ist als deren Ausgangsbasis die Verwendung der Daten des Persönlichkeitsprofiles besonders geeignet, da hierbei der für die Sicherheit geforderten Vielfältigkeit Rechnung getragen wird.

Eine Spielekombination, gebildet. aus Zahlen, Buchstaben, Zeichen, Figuren, Bildern, u.dgl., die dem Spieler einen Vergleich bzw. eine Zuordnung mit der ermittelten Gewinnkombination ermöglichen, ist Teil einer vorteilhaften Ausführungsform des erfindungsgemäßen Systems.

Ein Berechtigungscode zur Identifikation der beim Spielebetreiber hinterlegten Spielekombination stellt eine eindeutige Zuordnung zum Spieler und dessen Persönlichkeitsprofil sowie die Gültigkeit der Spielekombination ist Spiel selbst, sicher.

Der Berechtigungscode kann beispielsweise mehrstellig aus Zahlen, Buchstaben, Zeichen, u.dgl. zusammengestellt sein.

Das erfindungsgemässe Verfahren erlaubt es, dass der Spieler beim Spielebetreiber mehrere Spielekombinationen hinterlegt. Die erfindungsgemässe Vorrichtung in Form einer Spielekarte hat die Aufgabe, den Spieler beim Management/ bei der Verwaltung seiner Spielekombinationen zu unterstützen. So kann der Spieler Informationen anzeigen und ausdrucken lassen, aber auch Befehle und/oder Informationen an den Spielebetreiber übermitteln.

Die Teilnahme der jeweiligen Spielekombination am Spiel kann grundsätzlich eine, auf Bestehen des Spieles unbegrenzte Gültigkeitsdauer haben. Der Spieler kann über Befehle die Spielekombination aktivieren bzw. deaktivieren.

Wird die Spielekombination aktiviert, ist diese berechtigt am Spiel teilzunehmen. Die maximale Dauer der Teilnahmeberechtigung kann entweder durch einen festgelegten Wert oder durch eine bewußte Handlung, z.B. Deaktivierung durch den Spieler gegeben sein.

Wird die Spielekombination vom Spieler deaktiviert, ist diese nicht mehr berechtigt, am Spiel teilzunehmen. In einer weiteren Ausführungsform kann der Spielebetreiber die Spielekombination entweder bewusst oder durch Zufall bestimmt aktivieren bzw. deaktivieren.

Das erfindungsgemäße Verfahren ist für den breiten und allgemein nutzbaren Zugang vorgesehen. Besonders geeignet sind hierfür TV-Spieleshows, die als wesentliches Merkmal den öffentlichen Zugang zum Spieleablauf und die Ermittlung einer Gewinnkombination haben. Besonders zweckmäßig ist das vorgeschlagene Verfahren für einen kurzfristigen Spieleeinstieg unabhängig vom Ort und Zeitpunkt.

Eine weitere Anwendung des erfindungsgemäßen Systems bzw. Verfahrens ist mit zunehmender Verbreitung auch die Nutzung der Datennetze für den Spieleablauf selbst.

So ist das erfindungsgemässe System auch für die spezielle Form eines Datennetzes - das Internet - geeignet.

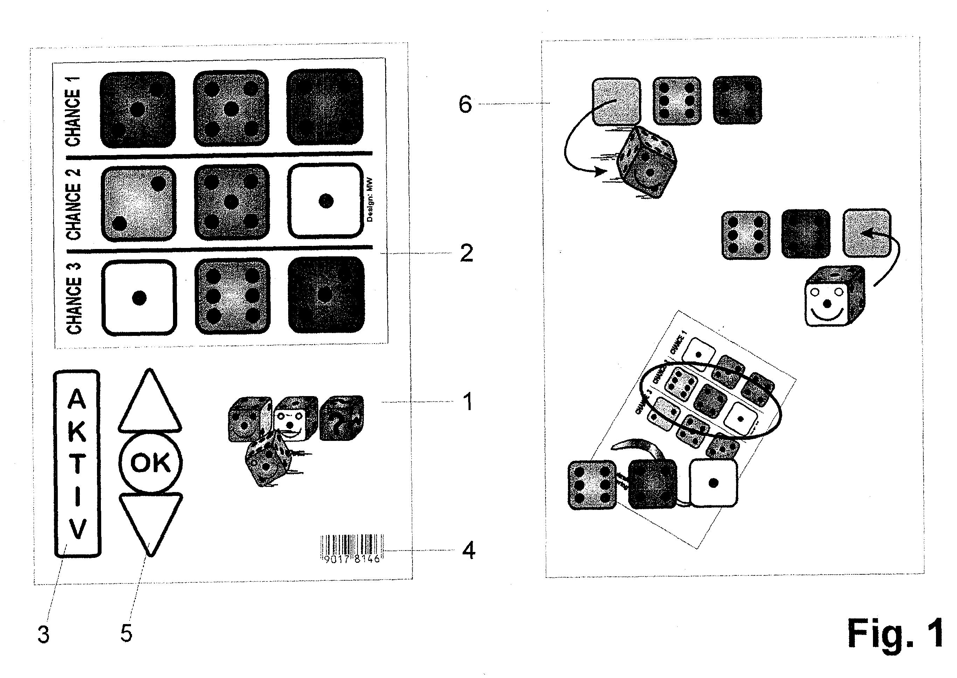

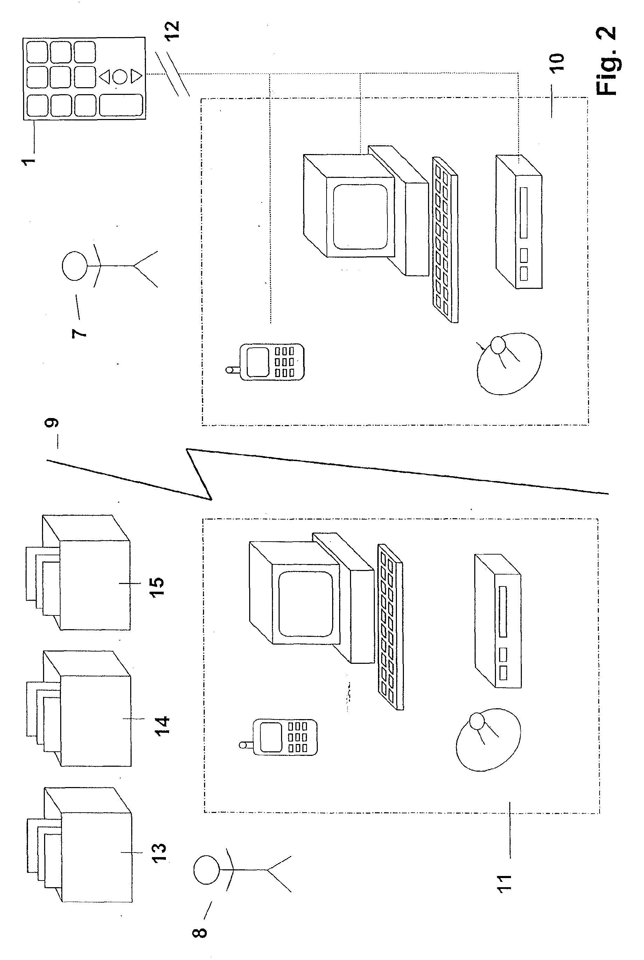

Nachstehend ist die Erfindung an Hand von in den Zeichnungen dargestellten Ausführungsbeispielen näher erläutert. Dabei zeigt die Fig. 1 einen beispielsweisen Aufbau einer erfindungsgemässen Spielekarte und Fig. 2 ist eine vereinfachte Darstellung des erfindungsgemässen Systems zur Teilnahme an Spielen unabhängig von Ort und Zeitpunkt.

Gemäß Fig. 1 weist eine erfindungsgemässe Spielekarte 1 mehrere Spielekombinationen 2, eine Aktivierungs-information 3, einen Berechtigungscode 4, dessen Zusammensetzung aus zufälligen und persönlichen Merkmalen eindeutig den beim Spielebetreiber hinterlegten Informationen zugeordnet werden kann, eine Eingabeeinrichtung 5 und einer Spieleanleitung 6 auf.

In der dargestellten Ausführungsform sind 9 Würfel mit unterschiedlichen Werten und Farben dargestellt. Wenn jeder Würfel die Werte 1 bis 6 sowie drei verschiedene Farben, z.B. rot, blau, grün, annehmen kann, beträgt die Wahrscheinlichkeit einer übereinstimmenden Kombination 1 zu 272.097.791 und berechnet sich zu (¹/₆ * ¹/₆ * ¹/₆ * ¹/₃)³. Dies zeigt die vielfältige Kombinationsmöglichkeit bei einfachster Ausführung der erfindungsgemässen Karte.

### Die Spielanleitung könnte z.B. wie folgt lauten:

Drei Würfel sind in einer Reihe angeordnet. Mit dem jeweils ersten wird gewürfelt und die beiden verbleibenden Würfel werden nach links geschoben.
Nach Bekanntgabe der geworfenen Augenzahl wird der Würfel am Ende der Reihe wieder angestellt.
Die ermittelte Kombination der Würfelwerte wird mit der Spielekarte verglichen. Passen die Würfel (Augenzahl und Reihenfolge), so haben Sie gewonnen.

In Fig. 2 ist die Struktur des erfindungsgemässen Systems stark vereinfacht dargestellt. Die Spielekarte 1 ist eine wesentliche Vorrichtung des Spielers 7 zum Empfang von Informationen und/oder Befehlen einerseits und zur Eingabe bzw. Weiterleitung von Befehlen und/oder Informationen andererseits. Über die Schnittstelle 12 können Befehle und/oder Informationen an die Kommunikationseinrichtung 10 des Spielers 7 übergeben und umgekehrt auch empfangen werden. Wie dargestellt könnte die Kommunikationseinrichtung ein Telefon, ein Computer oder eine Satellitenanlage sein.

Die Befehle und/oder Informationen werden über die Kommunikationsübertragung 9 an die Kommunikationseinrichtung 11 des Spielebetreibers 8 weitergeleitet. Die Einrichtungen 13, 14, 15 dienen zur Hinterlegung des Persönlichkeitsprofiles 13, der nicht aktivierten Spiele-kombinationen 14 und der aktivierten Spielekombinationen 15.

Die Anforderung einer neuen Spielekombination 2 erfolgt, wie in Fig. 1 dargestellt, mittels der Spielekarte 1. Der Spieler 7 gibt den Befehl über die Eingabeeinrichtung 5 ein. Die Spielekarte 1 übergibt den Befehl über die Schnittstelle 12 an die Kommunikationseinrichtung 10 des Spielers. Diese leitet den Befehl über die Kommunikationsübertragung 9 an die Kommunikationseinrichtung 11 des Spielebetreibers weiter.

Der Spielebetreiber 8 überprüft zweckmässig, ob der Spieler eine Berechtigung zur Anforderung einer Spiele-Kombination hat. Die Prüfung besteht im wesentlichen darin, dass der Befehl von einer gültigen Spielekarte 1 stammt und eine mögliche Begrenzung der Anzahl von Spielekombinationen die einem Spieler zugeordnet sind, nicht überschritten werden.

Die Information wieviel Spielekombinationen ein Spieler hält, wird in der Einrichtung des Persönlichkeitsprofiles 13 hinterlegt. Die Spielekombinationen selbst sind in einer Einrichtung für nicht aktivierte Spielekombinationen 14 hinterlegt.

Der Spielebetreiber 8 übermittelt die Information der generierten Spielekombination 2 über den umgekehrten Übertragungsweg an die Spielekarte 1, wo diese vom Spieler 7 angezeigt, ausgedruckt und in einer Speichereinrichtung der integrierten Elektronik abgelegt werden kann. Zudem können die einzelnen Spielekombinationen mittels der Eingabeeinrichtung 5 aus der Speichereinrichtung abgerufen und zur Anzeige gebracht werden.

Damit eine Spielekombination 2 an einem Spiel teilnehmen kann, muss diese vom Spieler 7 aktiviert werden. Dieses erfolgt zweckmässig über die Tastenkappe 3. Die Information ob eine Spielekombination aktiviert bzw. nicht aktiviert ist, könnte über das Merkmal, Tastenkappe 3 beleuchtet bzw. nicht beleuchtet erfolgen.

Der Befehl aktivieren wird von der Spielekarte 1 über die Schnittstelle 12 an die Kommunikationseinrichtung 10 des Spielers übergeben. Diese leitet den Befehl über die Kommunikationsübertragung 9 an die Kommunikationseinrichtung 11 des Spielebetreibers weiter.

Der Spielebetreiber 8 überprüft zweckmässig, ob die Spielekombination 2 in der Einrichtung für nicht aktivierte Spielekombinationen 14 enthalten ist. Ist dieses gegeben, wird die Spielekombination 2 in die Einrichtung für aktivierte Spielekombinationen 15 übertragen.

Der Spielebetreiber 8 übermittelt die Information der aktivierten Spielekombination über den umgekehrten Übertragungsweg an die Spielekarte 1.

Der Befehl "deaktivieren" erfordert analoges Vorgehen. Die Spielekombination 2 wird jedoch von der Einrichtung für aktivierte Spielekombinationen 15 in die Einrichtung für nicht aktivierte Spielekombinationen 14 übertragen.

Ist eine Gewinnkombination ermittelt und bekanntgegeben, wird diese mit jenen in der Einrichtung für aktivierte Spielekombinationen 15 verglichen, ob diese vollständig die ermittelten Kriterien der Gewinnkombination erfüllt.

Der Spielebetreiber 8 übermittelt die Information, ob eine Spielekombination 2 erfolgreich war oder nicht über den umgekehrten Übertragungsweg an die Spielekarte 1.

Sind die Gewinnansprüche ermittelt und überprüft, sind die Voraussetzungen geschaffen mit dem Spiel fortzufahren, beispielsweise kann der gewinnberechtigte Spieler in die TV-Spieleshow aktiv eingebunden werden. Die Übermittlung der Gewinnbeträge wird mittels herkömmlicher Technologien bekannt unter dem Ausdruck "e-commerce" durchgeführt werden.

Im Rahmen der Erfindung sind zahlreiche Abänderungen möglich. So könnte die Eingabe/Anzeigevorrichtung z. B. eine Tastatur oder eine Maus und ein Bildschirm sein und die Spielekarte könnte auf einem Bildschirm angezeigt werden.

## Patentansprüche

1. System zur Durchführung von Spielen über elektronische Kommunikationsmittel, **dadurch gekennzeichnet, dass** zur Übermittlung von das Spiel betreffenden Informationen vom und zum Spielebetreiber (8) jedem Spieler (7) eine mit einem integrierten Schaltkreis versehene Eingabe/Anzeigevorrichtung (1) zugeordnet ist, die vorzugsweise eine mit einem integrierten Schaltkreis versehene Spielekarte (1) ist und eine Schnittstelle für eine Kommunikationseinrichtung (10) des Spielers (7) aufweist.

2. System nach Anspruch 1, **dadurch gekennzeichnet, dass** die Spielekarte (1) eine Folientastatur aufweist.

3. System nach Anspruch 1 oder 2, **dadurch gekennzeichnet, dass** die Spielekarte (1) einen Berechtigungscode (4) aufweist.

4. Verfahren zur Durchführung des Systems nach einem der Ansprüche 1 bis 3, **dadurch gekennzeichnet, dass** ein Persönlichkeitsprofil des Spielers (7), wie Name, Adresse, Geburtsdatum u.dgl. beim Spielebetreiber (8) hinterlegt wird.

5. Verfahren zur Durchführung des Systems nach einem der Ansprüche 1 bis 3, **dadurch gekennzeichnet, dass** eine Spielekombination (2), gebildet aus Zahlen, Buchstaben, Zeichen, Figuren, Bilder u.dgl. vorgesehen ist.

6. Verfahren zur Durchführung des Systems nach einem der Ansprüche 1 bis 3, **dadurch gekennzeichnet, dass** der Spieler (7) beim Spielebetreiber (8) mehrere Spielekombinationen (2) hinterlegt.

7. Verfahren zur Durchführung des Systems nach einem der Ansprüche 1 bis 3, **dadurch gekennzeichnet, dass** die Teilnahme am Spiel durch den Spieler (7) aktivierbar oder deaktivierbar ist.
